# EUROPÄISCHE PATENTSCHRIFT

(11) **EP 4 323 671 B1**
(45) Veröffentlichungstag und Bekanntmachung des Hinweises auf die Patenterteilung: **05.11.2025**
(21) Anmeldenummer: 22717523.9
(22) Anmeldetag: 06.04.2022
(51) Int. Cl.: F16L 23/20, F16J 15/06, F16J 15/08

(54) **POSITIONIERANORDNUNG ZUR POSITIONIERUNG EINES BLECHELEMENTS AN EINER FLANSCHVERBINDUNG**
POSITIONING ASSEMBLY FOR POSITIONING A SHEET METAL ELEMENT ON A FLANGE CONNECTION
ENSEMBLE DE POSITIONNEMENT POUR POSITIONNER UN ÉLÉMENT EN TÔLE SUR UNE BRIDE DE RACCORDEMENT

(30) Priorität: 14.04.2021 DE 102021001942
(43) Veröffentlichungstag der Anmeldung: 21.02.2024
(73) Patentinhaber: DEUTZ Aktiengesellschaft, 51149 Köln (DE)
(72) Erfinder: SCHNEIDER, Martin, 51570 Windeck (DE); SCHMITZ, Oliver, 50354 Hürth (DE); SCHLIDT, Viktor, 50129 Bergheim (DE)
(86) Internationale Anmeldenummer: PCT/EP2022/000035
(87) Internationale Veröffentlichungsnummer: WO 2022/218567

(56) Entgegenhaltungen:
- EP-A1- 0 694 719
- DE-A1- 102006 027 726
- DE-T2- 69 516 759
- DE-U1- 29 923 554
- US-A1- 2003 102 636

## Beschreibung

Die Erfindung betrifft eine Positionieranordnung zur Positionierung eines Blechelements an einer Flanschverbindung. Die Positionieranordnung weist einen Flansch mit einer Mediumdurchgangsöffnung und einen Gegenflansch mit einer Mediumdurchgangsöffnung auf, wobei der Gegenflansch mittels mehrerer Befestigungsschrauben mit dem Flansch verbunden ist und die Mediumdurchgangsöffnungen des Flanschs und des Gegenflanschs miteinander kommunizieren. Ferner weist die Positionieranordnung ein Blechelement mit einem Anlageabschnitt auf, der in einer Anlageebene abdichtend zwischen dem Flansch und dem Gegenflansch um die Mediumdurchgangsöffnungen herum angeordnet ist, und mit ersten Laschen, die an einer ersten Durchgangsbohrung des Blechelements angeordnet sind und quer zur Anlageebene verlaufend in eine erste Aufnahmebohrung im Gegenflansch hineinragen.

Eine solche Positionieranordnung in Form einer Dichtungsanordnung ist aus der DE 10 2017 214 662 A1 bekannt, wobei ein Blechelement in Form einer Flachdichtung zwei Befestigungsanordnungen aufweist mit jeweils zwei Laschen, die in entsprechende Befestigungsbohrungen des Gegenflanschs eingreifen. Damit die Flachdichtung in einem am Gegenflansch vormontierten Zustand nicht unbeabsichtigt gelöst werden kann, weisen die Laschen jeweils an ihren Enden Vorsprünge auf, die formschlüssig hinter Hinterschnitte in den Befestigungsbohrungen eingreifen. Für die Laschen sind radiale Ausnehmungen in den Befestigungsbohrungen vorgesehen, in welche die Laschen eingreifen, sodass die Befestigungsschrauben durch die Befestigungsbohrungen zentriert werden und von den Laschen unbeeinflusst bleiben.

Eine weitere Dichtungsanordnung ist aus der US 2003/0102636 A1 bekannt, umfassend mehrere Öffnungen, die jeweils drei radial nach innen verlaufende Laschen aufweisen, gemäß der Präambel von Anspruch 1. Durch die Laschen kann ein darin eingesetzter Bolzen zur Vormontage in den jeweiligen Öffnungen gehalten werden.

Ferner sind herkömmliche Flachdichtungen ohne Laschen bekannt, die lediglich über Durchgangsbohrungen und Befestigungsschrauben an dem Flansch und dem Gegenflansch gehalten sind. Hier kann sich jedoch aufgrund von großen Toleranzen und bei einem schmalen Dichtungsabschnitt die Flachdichtung teilweise soweit verschieben, dass Undichtigkeiten entstehen können. Insbesondere bei sehr flachen Flachdichtungen besteht zudem die Gefahr, dass die Flachdichtung im Bereich der Durchgangsbohrungen seitlich verschoben wird und dabei in einen Gewindegang einer Befestigungsschraube eintauchen, sodass die Flachdichtung noch weiter als nur im Rahmen der Fertigungs- und Montagetoleranzen seitlich verschoben wird.

Aufgabe der vorliegenden Erfindung ist es, eine Positionieranordnung zu schaffen, die eine sichere Positionierung eines Blechelements gewährleistet und einfach aufgebaut ist.

Die Aufgabe wird durch eine Positionieranordnung zur Positionierung eines Blechelements an einer Flanschverbindung gelöst, wobei die Positionieranordnung einen Flansch mit einer Mediumdurchgangsöffnung und einen Gegenflansch mit einer Mediumdurchgangsöffnung aufweist. Der Gegenflansch ist mittels mehrerer Befestigungsschrauben mit dem Flansch verbunden und die Mediumdurchgangsöffnungen des Flanschs und des Gegenflanschs kommunizieren miteinander. Ferner weist die Positionieranordnung ein Blechelement mit einem Anlageabschnitt auf, der in einer Anlageebene abdichtend zwischen dem Flansch und dem Gegenflansch um die Mediumdurchgangsöffnungen herum angeordnet ist, und mit ersten Laschen, die an einer ersten Durchgangsbohrung des Blechelements angeordnet sind und quer zur Anlageebene verlaufend in eine erste Aufnahmebohrung im Gegenflansch hineinragen. Das Blechelement weist mindestens drei erste Laschen auf, die mit radialem Spiel in der ersten Aufnahmebohrung aufgenommen sind. Das Blechelement sitzt mittels der ersten Laschen auf einer ersten der Befestigungsschrauben, die durch die erste Aufnahmebohrung und durch die erste Durchgangsbohrung hindurchgeführt und in eine Gewindebohrung im Flansch eingeschraubt ist, und ist hierdurch gegenüber dem Flansch positioniert. Um eine weitere sichere Positionierung des Blechelements gegenüber dem Flansch zu gewährleisten, weist das Blechelement eine zweite Durchgangsbohrung auf, an der zwei diametral gegenüberliegend angeordnete zweite Laschen angeordnet sind, die quer zur Anlageebene verlaufend mit radialem Spiel in eine zweite Aufnahmebohrung im Gegenflansch hineinragen. Das Blechelement sitzt mittels der beiden zweiten Laschen auf einer zweiten der Befestigungsschrauben, die durch die zweite Aufnahmebohrung und durch die zweite Durchgangsbohrung hindurchgeführt und in eine Gewindebohrung im Flansch eingeschraubt ist, und ist hierdurch gegenüber dem Flansch positioniert. Die zweiten Laschen sind auf gegenüberliegenden Seiten einer ersten Verbindungsebene angeordnet, die eine erste Längsachse der ersten Befestigungsschraube und eine zweite Längsachse der zweiten Befestigungsschraube beinhaltet.

Durch die drei ersten Laschen ist das Blechelement gegenüber einer Längsachse der ersten Befestigungsschraube zentriert. Da die erste Befestigungsschraube in die Gewindebohrung des Flanschs eingeschraubt ist, ist das Blechelement auch gegenüber dem Flansch positioniert, sodass keine weiteren Elemente als Positionierhilfen, wie zum Beispiel Passstifte und Passbohrungen, vorgesehen werden müssen.

Durch die Anordnung der zweiten Laschen ist gewährleistet, dass das Blechelement über die zweiten Laschen gegenüber dem Flansch gegen ein Verdrehen um die erste Längsachse der ersten Befestigungsschraube abgestützt ist.

Die Positionieranordnung kann zum Beispiel als Dichtungsanordnung ausgebildet sein, bei der das Blechelement eine Flachdichtung ist, die den Mediumdurchgang zwischen den Mediumdurchgangsöffnungen des Flanschs und des Gegenflanschs abdichten. Der Anlageabschnitt dient in diesem Fall als Dichtungsabschnitt, der zusätzlich mit einer umlaufenden Abdichtsicke oder einem umlaufenden Abdichtelement, zum Beispiel aus einem Elastomer, versehen sein kann. Eine solche Dichtungsanordnung kann zum Beispiel in einem Abgasstrang einer Brennkraftmaschine angeordnet sein.

Bei dem Blechelement kann es sich auch um ein anderes Element handeln, wie zum Beispiel eine Blende, eine Drossel oder ein Leitblech. Der Mediumdurchgang kann zum Hindurchführen verschiedener Medien dienen, also gasförmige Medien, wie zum Beispiel Abgase etc., oder flüssige Medien, wie zum Beispiel Kühlflüssigkeiten etc.

Es kann vorgesehen sein, dass das radiale Spiel der ersten Laschen gegenüber der ersten Aufnahmebohrung größer ist als ein radiales Spiel der ersten Laschen gegenüber der ersten Befestigungsschraube.

Die erste und/oder die zweite Aufnahmebohrung können zylindrisch ausgestaltet sein.

Es kann vorgesehen sein, dass, quer zur ersten Verbindungsebene, das radiale Spiel der zweiten Laschen gegenüber der zweiten Aufnahmebohrung größer ist als ein radiales Spiel der zweiten Laschen gegenüber der zweiten Befestigungsschraube.

In einem weiteren Ausführungsbeispiel weist der Gegenflansch eine erste Positionierungsbohrung auf, mit der der Gegenflansch auf einer der Befestigungsschrauben, die durch die erste Positionierungsbohrung und durch eine Durchgangsbohrung des Blechelements hindurchgeführt und in eine Gewindebohrung im Flansch eingeschraubt ist, sitzt, und hierdurch gegenüber dem Flansch positioniert ist.

Somit ist zusätzlich zu der Positionierung des Blechelements gegenüber dem Flansch über die erste Befestigungsschraube auch eine Positionierung des Gegenflanschs gegenüber dem Flansch über eine der Befestigungsschrauben gewährleistet. Damit ist der Gegenflansch unabhängig vom Blechelement gegenüber dem Flansch positioniert.

Hierbei kann gemäß einer ersten Alternative der Gegenflansch mit der ersten Positionierungsbohrung auf einer dritten der Befestigungsschrauben sitzen, die durch eine dritte Durchgangsbohrung des Blechelements hindurchgeführt und in eine Gewindebohrung im Flansch eingeschraubt ist. Die Positionierungen des Gegenflanschs gegenüber dem Flansch wird somit unabhängig von der Positionierung des Blechelements über eine andere der Befestigungsschrauben erzielt.

Gemäß einer zweiten Alternative kann der Gegenflansch mit der ersten Positionierungsbohrung auf der ersten Befestigungsschraube sitzen. Der Gegenflansch ist somit über dieselbe Befestigungsschraube gegenüber dem Flansch positioniert wie das Blechelement. Hierbei sind die erste Aufnahmebohrung und die erste Positionierungsbohrung koaxial zueinander anzuordnen, sodass die erste Aufnahmebohrung und die erste Positionierungsbohrung jeweils als Bohrungsabschnitt einer gemeinsamen Längsbohrung ausgebildet sind. Der Durchmesser der ersten Aufnahmebohrung ist hierbei größer zu bemessen als der Durchmesser der ersten Positionierungsbohrung, sodass sich eine gestufte Längsbohrung ergibt.

Das radiale Spiel der ersten Laschen in der ersten Aufnahmebohrung kann größer sein als ein radiales Spiel der Befestigungsschraube in der ersten Positionierungsbohrung.

Hierdurch wird sichergestellt, dass bei einer Verschiebung des Gegenflanschs parallel zur Anlageebene dieser stets über die Befestigungsschraube in der ersten Positionierungsbohrung radial abgestützt ist, ohne dass die ersten Laschen an die Innenwandung der ersten Aufnahmebohrung stoßen.

Der Gegenflansch kann ferner eine zweite Positionierungsbohrung aufweisen, mit der der Gegenflansch auf einer der Befestigungsschrauben, die durch die zweite Positionierungsbohrung und durch eine Durchgangsbohrung des Blechelements hindurchgeführt ist und in eine Gewindebohrung im Flansch eingeschraubt ist, sitzt und hierdurch gegenüber dem Flansch positioniert ist. Die zweite Positionierungsbohrung ist hierbei als Langloch mit einem längsten Durchmesser und einem kürzesten Durchmesser in Anlageebene ausgebildet, wobei der längste Durchmesser zur ersten Positionierungsbohrung ausgerichtet ist.

Hierbei kann gemäß einer ersten Alternative der Gegenflansch mit der zweiten Positionierungsbohrung auf einer vierten der Befestigungsschrauben sitzen, die durch eine vierte Durchgangsbohrung des Blechelements hindurchgeführt und in eine Gewindebohrung im Flansch eingeschraubt ist.

Gemäß einer zweiten Alternative kann der Gegenflansch auch mit der zweiten Positionierungsbohrung auf der zweiten Befestigungsschraube sitzen. Der Gegenflansch ist somit über dieselbe Befestigungsschraube gegenüber dem Flansch positioniert wie das Blechelement. Hierbei sind die zweite Aufnahmebohrung und die zweite Positionierungsbohrung koaxial zueinander anzuordnen, sodass die zweite Aufnahmebohrung und die zweite Positionierungsbohrung jeweils als Bohrungsabschnitt einer gemeinsamen Längsbohrung ausgebildet sind. Der Durchmesser der zweiten Aufnahmebohrung ist hierbei größer zu bemessen als der Durchmesser der zweiten Positionierungsbohrung, sodass sich eine gestufte Längsbohrung ergibt.

Ein radiales Spiel der Befestigungsschraube in der zweiten Positionierungsbohrung quer zu einer zweiten Verbindungsebene, die eine Längsachse der Befestigungsschraube in der ersten Positionierungsbohrung und eine Längsachse der Befestigungsschraube in der zweiten Positionierungsbohrung beinhaltet, kann kleiner ausgebildet sein als ein radiales Spiel der zweiten Laschen innerhalb der zweiten Aufnahmebohrung quer zur ersten Verbindungsebene.

Hierdurch wird sichergestellt, dass bei einer Verdrehung des Gegenflanschs gegenüber dem Flansch dieser stets über die Befestigungsschraube in der zweiten Positionierungsbohrung radial abgestützt wird, ohne dass die zweiten Laschen an die Innenwandung der zweiten Aufnahmebohrung stoßen. Damit ist der Gegenflansch unabhängig vom Blechelement auch gegen Verdrehen gegenüber dem Flansch positioniert.

Mit dem Begriff "Radialspiel" ist ein Spalt zwischen der jeweiligen Befestigungsschraube bzw. den jeweiligen Laschen und der jeweiligen Aufnahmebohrung bzw. Positionierungsbohrung gemeint, unabhängig davon, ob eine Verlagerung der Befestigungsschraube innerhalb der jeweiligen Aufnahmebohrung bzw. Positionierungsbohrung in diesem Ausmaß überhaupt möglich ist oder nicht.

Um zu verhindern, dass bei einer Verschiebung des Blechelements in der Anlageebene dieses radial in einen Gewindegang einer Befestigungsschraube eintaucht, wodurch das Radialspiel des Blechelements vergrößert wäre, kann vorgesehen sein, dass die Laschen quer zur Anlageebene länger ausgebildet sind als die Steigung der jeweiligen Befestigungsschraube. Insbesondere können die Längen der Laschen mindestens dem 1,2-fachen der Steigung der jeweiligen Befestigungsschraube entsprechen.

Ein bevorzugtes Ausführungsbeispiel wird im Folgenden anhand der Zeichnungen näher erläutert. Hierin zeigt
- Figur 1: eine Explosionsdarstellung einer Positionieranordnung,
- Figur 2: eine Draufsicht der ersten Befestigungsanordnung der Positionieranordnung gemäß Figur 1,
- Figur 3: eine Draufsicht der zweiten Befestigungsanordnung der Positionieranordnung gemäß Figur 1,
- Figur 4: eine Draufsicht der dritten Befestigungsanordnung der Positionieranordnung gemäß Figur 1 und
- Figur 5: eine Draufsicht der vierten Befestigungsanordnung der Positionieranordnung gemäß Figur 1.

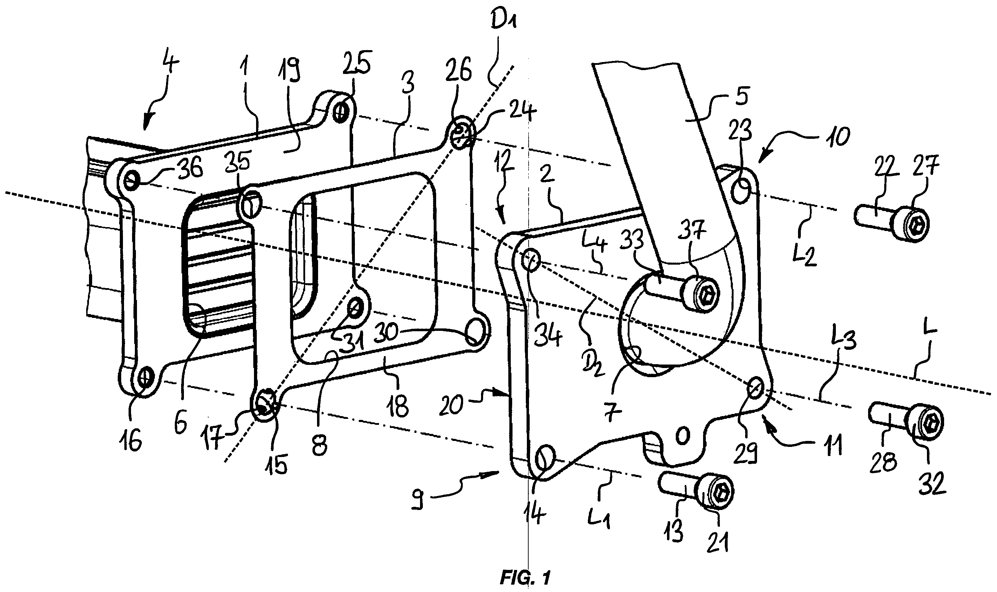

Figur 1 zeigt eine Explosionsdarstellung eines Ausführungsbeispiels einer Positionieranordnung mit einem Flansch 1, an dem ein Gegenflansch 2 befestigt ist, wobei zwischen dem Flansch 1 und dem Gegenflansch 2 ein Blechelement 3 angeordnet ist. Das Blechelement 3 ist aus einem metallischen Material hergestellt und dient als Flachdichtung. Der Flansch 1 ist im gezeigten Ausführungsbeispiel Teil eines AGR- (Abgasrückführungs-) Kühlers 4 einer Brennkraftmaschine, insbesondere eines Verbrennungsmotors. Über den Flansch 1 ist der AGR-Kühler 4 leitungsmäßig mit einer AGR-Leitung 5 verbunden, die mit dem Gegenflansch 2 versehen ist. Der Flansch 1 des AGR-Kühlers 4 weist hierzu eine Mediumdurchgangsöffnung 6 auf, um Abgas aus dem AGR-Kühler 4 hindurch leiten zu können. Der Gegenflansch 2 weist ebenfalls eine Mediumdurchgangsöffnung 7 auf, welche leitungsmäßig mit der AGR-Leitung 5 verbunden ist, sodass sich ein Mediumdurchgang ergibt.

Zum Abdichten dieses Mediumdurchgangs nach außen weist das Blechelement 3 einen Anlageabschnitt 18 auf, der im vorliegenden Ausführungsbeispiel als Dichtabschnitt dient und ebenfalls eine Mediumdurchgangsöffnung 8 bildet, sodass der Anlageabschnitt 18 in einer Anlageebene quer zu einer Längsachse L der Dichtanordnung abdichtend zwischen dem Flansch 1 und dem Gegenflansch 2 angeordnet ist. Der Anlageabschnitt 18 ist hierbei dichtend in Anlage zu einer Dichtungsfläche 19 um die Mediumdurchgangsöffnung 6 des Flansch 1 und einer Dichtungsfläche 20, die um die Mediumdurchgangsöffnung 7 des Gegenflanschs 2 angeordnet ist. Die Dichtungsflächen 19, 20 sind einander zugewandt und ebenfalls in der Anlageebene angeordnet und nehmen das Blechelement 3 zwischen sich auf.

In dem gezeigten Ausführungsbeispiel ist der Gegenflansch 2 über eine erste Befestigungsanordnung 9, eine zweite Befestigungsanordnung 10, eine dritte Befestigungsanordnung 11 und eine vierte Befestigungsanordnung 12 mit dem Flansch 1 verbunden.

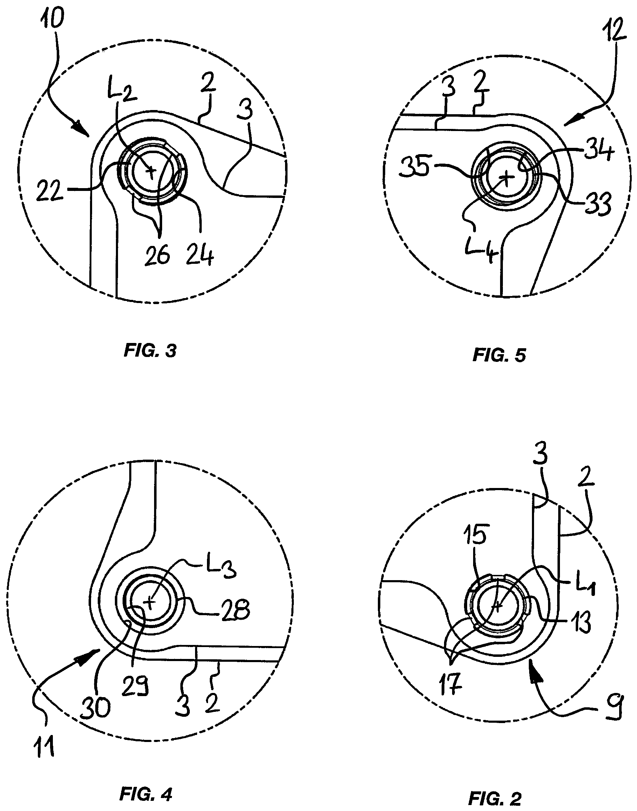

Die erste Befestigungsanordnung 9 ist auch in einer vergrößerten Draufsicht auf das Blechelement 3 und in Richtung zum Gegenflansch 2 in Figur 2 dargestellt. Die erste Befestigungsanordnung 9 umfasst eine erste Befestigungsschraube 13, eine erste Aufnahmebohrung 14 im Gegenflansch 2, eine erste Durchgangsbohrung 15 im Blechelement 3 sowie eine erste Gewindebohrung 16 im Flansch 1. Die erste Befestigungsschraube 13 ist entlang einer ersten Längsachse L1, die parallel zur Längsachse L der Positionieranordnung angeordnet ist, durch die erste Aufnahmebohrung 14 und durch die erste Durchgangsbohrung 15 hindurchgeführt und in die erste Gewindebohrung 16 eingeschraubt. Hierbei stützt sich die erste Befestigungsschraube 13 über einen Schraubenkopf 21 auf einer vom Flansch 1 abgewandten Seite des Gegenflanschs 2 axial ab und verspannt somit den Gegenflansch 2 gegen den Flansch 1 und verspannt hierbei das Blechelement 3 zwischen dem Flansch 1 und dem Gegenflansch 2.

Mit dem Anlageabschnitt 18 des Blechelements 3 sind im gezeigten Ausführungsbeispiel drei erste Laschen 17 verbunden, die an der ersten Durchgangsbohrung 15 angeordnet sind und in dem gezeigten Ausführungsbeispiel um die erste Längsachse L1 gleichmäßig verteilt angeordnet sind. Es können auch mehr als drei erste Laschen 17 vorhanden sein. Grundsätzlich können die ersten Laschen 17 auch ungleichmäßig verteilt sein. Die Laschen 17 können integraler Bestandteil des Blechelements 3 sein, also einstückig mit dem Anlageabschnitt 18 ausgebildet sein. Die ersten Laschen 17 können durch einen Umformprozess umgebogen sein und verlaufen quer zur Anlageebene. Alternativ könnten die ersten Laschen 17 auch Bestandteil eines separaten Bauteils, zum Beispiel einer Hülse, sein, das mit dem Anlageabschnitt 18 verbunden ist.

Die ersten Laschen 17 ragen quer zur Anlageebene in die erste Aufnahmebohrung 14 des Gegenflanschs 2 ein, wobei die Befestigungsschraube 13 zwischen den ersten Laschen 17 durch die erste Durchgangsbohrung 15 hindurchgeführt ist. Somit ist das Blechelement 3 über die ersten Laschen 17 auf der ersten Befestigungsschraube 13 zentriert und positioniert. Dadurch, dass zumindest drei erste Laschen 17 vorgesehen sind, ist eine Zentrierung des Blechelements 3 auf der ersten Befestigungsschraube 13 sichergestellt. Ferner ist somit das Blechelement 3 gegenüber dem Flansch 1 positioniert.

Um zu vermeiden, dass das Blechelement 3 bei einem Verschieben in der Anlageebene in einen Gewindegang der ersten Befestigungsschraube 13 eintaucht und somit ein vergrößertes Spiel des Blechelements 3 in der Anlageebene vorhanden ist, sind die ersten Laschen 17 quer zur Anlageebene länger ausgebildet als die Steigung der ersten Befestigungsschraube 13. Das bedeutet, dass die ersten Laschen 17 länger sind als der Abstand zwischen zwei Gewindegängen der ersten Befestigungsschraube 13, sodass sich die ersten Laschen 17 stets auf Spitzen der Gewindegänge der ersten Befestigungsschraube 13 radial abstützen.

Ferner ist in dem gezeigten Ausführungsbeispiel der Gegenflansch 2 über eine zweite Befestigungsanordnung 10 mit dem Flansch 1 verbunden.

Die zweite Befestigungsanordnung 10 ist auch in einer vergrößerten Draufsicht auf das Blechelement 3 und in Richtung zum Gegenflansch 2 in Figur 3 dargestellt. Die zweite Befestigungsanordnung 10 umfasst eine zweite Befestigungsschraube 22, eine zweite Aufnahmebohrung 23 im Gegenflansch 2, eine zweite Durchgangsbohrung 24 im Blechelement 3 sowie eine zweite Gewindebohrung 25 im Flansch 1. Die zweite Befestigungsschraube 22 ist entlang einer zweiten Längsachse L2, die parallel zur Längsachse L der Positionieranordnung angeordnet ist, durch die zweite Aufnahmebohrung 23 und die zweite Durchgangsbohrung 24 hindurchgeführt und in die zweite Gewindebohrung 25 eingeschraubt. Die zweite Befestigungsschraube 22 stützt sich somit axial ebenfalls über einen Schraubenkopf 27 gegen den Gegenflansch 2 ab.

Mit dem Anlageabschnitt 18 des Blechelements 3 sind im vorliegenden Ausführungsbeispiel 2 zweite Laschen 26 verbunden, die identisch zu den ersten Laschen 17 ausgebildet sein können. Grundsätzlich können die zweiten Laschen 26 jedoch auch eine andere Form aufweisen als die ersten Laschen 17. Sie können zum Beispiel für eine größere Anlagefläche an der zweiten Befestigungsschraube 22 breiter gestaltet sein. Die zweiten Laschen 26 ragen axial quer von der Anlageebene in die zweite Aufnahmebohrung 23 hinein. Die beiden zweiten Laschen 26 sind hierbei auf gegenüberliegenden Seiten einer Verbindungsebene, die durch eine Diagonale D1 in Figur 1 angedeutet ist und die erste Längsachse L1 der ersten Befestigungsschraube 13 und die zweite Längsachse L2 der zweiten Befestigungsschraube 22 beinhaltet, angeordnet. Über die zweiten Laschen 26 ist das Blechelement 3 auf der zweiten Befestigungsschraube 22 positioniert. Damit ist das Blechelement 3 auch genau gegenüber dem Flansch 1 positioniert.

Ferner ist in dem gezeigten Ausführungsbeispiel der Gegenflansch 2 über eine dritte Befestigungsanordnung 11 mit dem Flansch 1 verbunden.

Grundsätzlich ist jedoch auch denkbar, dass nur die erste Befestigungsanordnung 9 und die zweite Befestigungsanordnung 10 vorgesehen sind. Der Gegenflansch ist in diesem Fall über dieselbe Befestigungsschraube gegenüber dem Flansch positioniert wie das Blechelement. Hierbei sind die erste Aufnahmebohrung und die erste Positionierungsbohrung sowie die zweite Aufnahmebohrung und die zweite Positionierungsbohrung koaxial zueinander anzuordnen, sodass die Aufnahmebohrungen und die Positionierungsbohrungen jeweils als Bohrungsabschnitt einer gemeinsamen Längsbohrung ausgebildet sind. Der Durchmesser der Aufnahmebohrungen ist hierbei größer zu bemessen als der Durchmesser der jeweiligen Positionierungsbohrung, sodass sich gestufte Längsbohrungen ergeben.

Die dritte Befestigungsanordnung 11 ist auch in einer vergrößerten Draufsicht auf das Blechelement 3 und in Richtung zum Gegenflansch 2 in Figur 4 dargestellt. Die dritte Befestigungsanordnung 11 umfasst eine dritte Befestigungsschraube 28, eine erste Positionierungsbohrung 29 im Gegenflansch 2, eine dritte Durchgangsbohrung 30 in dem Blechelement 3 sowie eine dritte Gewindebohrung 31 im Flansch 1. Die dritte Befestigungsschraube 28 ist entlang einer dritte Längsachse L3, die parallel zur Längsachse L der Positionieranordnung angeordnet ist, durch die erste Positionierungsbohrung 29 und die dritte Durchgangsbohrung 30 hindurchgeführt und in die dritte Gewindebohrung 31 eingeschraubt. Die dritte Befestigungsschraube 28 stützt sich axial ebenfalls über einen Schraubenkopf 32 gegen den Gegenflansch 2 ab. Im Unterschied zur ersten Befestigungsanordnung 9 und zur zweiten Befestigungsanordnung 10 sind an der dritten Durchgangsbohrung 30 des Blechelements 3 keine Laschen angeordnet. Die dritte Durchgangsbohrung 30 weist in dem gezeigten Ausführungsbeispiel gegenüber der ersten Positionierungsbohrung 29 einen vergrößerten Durchmesser auf, wobei die erste Positionierungsbohrung 29 zylindrisch ausgeführt ist. Der Gegenflansch 2 ist über die erste Positionierungsbohrung 29 auf der dritten Befestigungsschraube 28 zentriert und somit gegenüber dem Flansch 1 positioniert.

Ferner ist in dem gezeigten Ausführungsbeispiel der Gegenflansch 2 über eine vierte Befestigungsanordnung 12 mit dem Flansch 1 verbunden.

Die vierte Befestigungsanordnung 12 ist auch in einer vergrößerten Draufsicht auf das Blechelement 3 und in Richtung zum Gegenflansch 2 in Figur 5 dargestellt. Die vierte Befestigungsanordnung 12 umfasst eine vierte Befestigungsschraube 33, eine zweite Positionierungsbohrung 34 im Gegenflansch 2, eine vierte Durchgangsbohrung 35 in dem Blechelement 3 sowie eine vierte Gewindebohrung 36 im Flansch 1. Die vierte Befestigungsschraube 33 ist entlang einer vierte Längsachse L4, die parallel zur Längsachse L der Positionieranordnung angeordnet ist, durch die zweite Positionierungsbohrung 34 und die vierte Durchgangsbohrung 35 hindurchgeführt und in die vierte Gewindebohrung 36 eingeschraubt. Die vierte Befestigungsschraube 33 stützt sich axial ebenfalls über einen Schraubenkopf 37 gegen den Gegenflansch 2 ab. Ebenso wie die dritte Befestigungsschraube 28 weist die vierte Befestigungsanordnung 12 eine vierte Durchgangsbohrung 35 an dem Blechelement 3 ohne Laschen auf. Die zweite Positionierungsbohrung 34 ist als Langloch ausgebildet mit einem längsten Durchmesser in Richtung zur ersten Positionierungsbohrung 29. Der Gegenflansch 2 ist somit auch über die zweite Positionierungsbohrung 34 auf der vierten Befestigungsschraube 33 und dadurch gegenüber dem Flansch 1 positioniert.

In dem gezeigten Ausführungsbeispiel sind die erste Aufnahmebohrung 14 und die zweite Aufnahmebohrung 23 identisch ausgebildet, d. h. sie weisen einen identischen Durchmesser auf. Die erste Positionierungsbohrung 29 weist einen Durchmesser auf, der gegenüber der ersten Aufnahmebohrung 14 und der zweiten Aufnahmebohrung 23 kleiner ist. Der Durchmesser der ersten Positionierungsbohrung 29 kann zum Beispiel in etwa dem Abstand zwischen den beiden zweiten Laschen 26 bzw. einem durch die ersten Laschen 17 umschriebenen Innendurchmesser entsprechen. Die erste Positionierungsbohrung 29 ist, ebenso wie die erste Aufnahmebohrung 14 und die zweite Aufnahmebohrung 23, zylindrisch gestaltet. Die zweite Positionierungsbohrung 34 ist als Langloch gestaltet, dass sich mit einem längsten Durchmesser in Richtung einer weiteren Verbindungsebene, die durch die Diagonale D2 in Figur 1 angedeutet ist, erstreckt. Die weitere Verbindungsebene beinhaltet die dritte Längsachse L3 und die wird Längsachse L4.

### Bezugszeichenliste

- 1: Flansch
- 2: Gegenflansch
- 3: Blechelement
- 4: AGR-Kühler
- 5: AGR-Leitung
- 6: Mediumdurchgangsöffnung
- 7: Mediumdurchgangsöffnung
- 8: Mediumdurchgangsöffnung
- 9: erste Befestigungsanordnung
- 10: zweite Befestigungsanordnung
- 11: dritte Befestigungsanordnung
- 12: vierte Befestigungsanordnung
- 13: erste Befestigungsschraube
- 14: erste Aufnahmebohrung
- 15: erste Durchgangsbohrung
- 16: erste Gewindebohrung
- 17: erste Lasche
- 18: Anlageabschnitt
- 19: Dichtungsfläche
- 20: Dichtungsfläche
- 21: Schraubenkopf
- 22: zweite Befestigungsschraube
- 23: zweite Aufnahmebohrung
- 24: zweite Durchgangsbohrung
- 25: zweite Gewindebohrung
- 26: zweite Lasche
- 27: Schraubenkopf
- 28: dritte Befestigungsschraube
- 29: erste Positionierungsbohrung
- 30: dritte Durchgangsbohrung
- 31: dritte Gewindebohrung
- 32: Schraubenkopf
- 33: vierte Befestigungsschraube
- 34: zweite Positionierungsbohrung
- 35: vierte Durchgangsbohrung
- 36: vierte Gewindebohrung
- 37: Schraubenkopf

## Patentansprüche

1. Positionieranordnung zur Positionierung eines Blechelements an einer Flanschverbindung umfassend
einen Flansch (1) mit einer Mediumdurchgangsöffnung (6),
einen Gegenflansch (2) mit einer Mediumdurchgangsöffnung (7), wobei der Gegenflansch (2) mittels mehrerer Befestigungsschrauben (13, 22, 28, 33) mit dem Flansch (1) verbunden ist und die Mediumdurchgangsöffnungen (6, 7) des Flanschs (1) und des Gegenflanschs (2) miteinander kommunizieren, und
ein Blechelement (3) mit einem Anlageabschnitt (18), der in einer Anlageebene zwischen dem Flansch (1) und dem Gegenflansch (2) um die Mediumdurchgangsöffnungen (6, 7) herum angeordnet ist, und mit ersten Laschen (17), die an einer ersten Durchgangsbohrung (15) des Blechelements (3) angeordnet sind und quer zur Anlageebene verlaufend in eine erste Aufnahmebohrung (14) im Gegenflansch (2) hineinragen,
wobei
das Blechelement (3) mindestens drei erste Laschen (17) aufweist, die mit radialem Spiel in der ersten Aufnahmebohrung (14) aufgenommen sind, und
das Blechelement (3) mittels der ersten Laschen (17) auf einer ersten der Befestigungsschrauben (13), die durch die erste Aufnahmebohrung (14) und durch die erste Durchgangsbohrung (15) hindurchgeführt und in eine Gewindebohrung (16) im Flansch (1) eingeschraubt ist, sitzt und gegenüber dem Flansch (1) positioniert ist, **dadurch gekennzeichnet, dass** das Blechelement (3) eine zweite Durchgangsbohrung (24) aufweist, an der zwei diametral gegenüberliegend angeordnete zweite Laschen (26) angeordnet sind, die, quer zur Anlageebene verlaufend, mit radialem Spiel in eine zweite Aufnahmebohrung (23) im Gegenflansch (2) hineinragen, und
das Blechelement (3) mittels der beiden zweiten Laschen (26) auf einer zweiten der Befestigungsschrauben (22), die durch die zweite Aufnahmebohrung (23) und durch die zweite Durchgangsbohrung (24) hindurchgeführt und in eine Gewindebohrung (25) im Flansch (1) eingeschraubt ist, sitzt und gegenüber dem Flansch (1) positioniert ist, und
die zweiten Laschen (26) auf gegenüberliegenden Seiten einer ersten Verbindungsebene (D1) angeordnet sind, die eine erste Längsachse (L1) der ersten Befestigungsschraube (13) und eine zweite Längsachse (L2) der zweiten Befestigungsschraube (22) beinhaltet.

2. Positionieranordnung nach Anspruch 1,
**dadurch gekennzeichnet,**
**dass** das radiale Spiel der ersten Laschen (17) gegenüber der ersten Aufnahmebohrung (14) größer ist als ein radiales Spiel der ersten Laschen (17) gegenüber der ersten Befestigungsschraube (13).

3. Positionieranordnung nach Anspruch 31,
**dadurch gekennzeichnet,**
**dass**, quer zur ersten Verbindungsebene (D1), das radiale Spiel der zweiten Laschen (26) gegenüber der zweiten Aufnahmebohrung (23) größer ist als ein radiales Spiel der zweiten Laschen (26) gegenüber der zweiten Befestigungsschraube (22).

4. Positionieranordnung nach einem der Ansprüche 1 bis 43,
**dadurch gekennzeichnet,**
**dass** der Gegenflansch (2) eine erste Positionierungsbohrung (29) aufweist, mit der der Gegenflansch (2) auf einer der Befestigungsschrauben (28), die durch die erste Positionierungsbohrung (29) und durch eine Durchgangsbohrung (30) des Blechelements (3) hindurchgeführt und in eine Gewindebohrung (31) im Flansch (1) eingeschraubt ist, sitzt und gegenüber dem Flansch (1) positioniert ist.

5. Positionieranordnung nach Anspruch 54,
**dadurch gekennzeichnet,**
**dass** der Gegenflansch (2) mit der ersten Positionierungsbohrung (29) auf einer dritten der Befestigungsschrauben (28) sitzt, die durch eine dritte Durchgangsbohrung (30) des Blechelements (3) hindurchgeführt und in eine Gewindebohrung (31) im Flansch (1) eingeschraubt ist, oder
**dass** der Gegenflansch (2) mit der ersten Positionierungsbohrung (29) auf der ersten Befestigungsschraube (13) sitzt.

6. Positionieranordnung nach Anspruch 4 oder 5,
**dadurch gekennzeichnet,**
**dass** das radiale Spiel der ersten Laschen (17) in der ersten Aufnahmebohrung (14) größer ist als ein radiales Spiel der Befestigungsschraube (28) in der erste Positionierungsbohrung (29).

7. Positionieranordnung nach einem der Ansprüche 4 bis 6,
**dadurch gekennzeichnet,**
**dass** der Gegenflansch (2) eine zweite Positionierungsbohrung (34) aufweist, mit der der Gegenflansch (2) auf einer der Befestigungsschrauben (33), die durch die zweite Positionierungsbohrung (34) und durch eine Durchgangsbohrung (35) des Blechelements (3) hindurchgeführt ist und in eine Gewindebohrung (36) im Flansch (1) eingeschraubt ist, sitzt und gegenüber dem Flansch (1) positioniert ist, und
**dass** die zweite Positionierungsbohrung (34) als Langloch mit einem längsten Durchmesser und einem kürzesten Durchmesser in Anlageebene ausgebildet ist, wobei der längste Durchmesser zur ersten Positionierungsbohrung (29) ausgerichtet ist.

8. Positionieranordnung nach Anspruch 7,
**dadurch gekennzeichnet,**
**dass** der Gegenflansch (2) mit der zweiten Positionierungsbohrung (34) auf einer vierten der Befestigungsschrauben (33) sitzt, die durch eine vierte Durchgangsbohrung (35) des Blechelements (3) hindurchgeführt und in eine Gewindebohrung (36) im Flansch (1) eingeschraubt ist, oder
**dass** der Gegenflansch (2) mit der zweiten Positionierungsbohrung (34) auf der zweiten Befestigungsschraube (22) sitzt.

9. Positionieranordnung nach einem der Ansprüche 2 und 3 bis 8,
**dadurch gekennzeichnet,**
**dass** ein radiales Spiel der Befestigungsschraube (33) in der zweiten Positionierungsbohrung (34) quer zu einer zweiten Verbindungsebene (D2), die eine Längsachse (L3) der Befestigungsschraube (28) in der ersten Positionierungsbohrung (29) und eine Längsachse (L4) der Befestigungsschraube (33) in der zweiten Positionierungsbohrung (34) beinhaltet, kleiner ist als ein radiales Spiel der zweiten Laschen (26) innerhalb der zweiten Aufnahmebohrung (23) quer zur ersten Verbindungsebene (D1).

10. Positionieranordnung nach einem der Ansprüche 1 bis 9,
**dadurch gekennzeichnet,**
**dass** die Laschen (17, 26) quer zur Anlageebene länger ausgebildet sind als die Steigung der jeweiligen Befestigungsschraube (13, 22).

## Claims

1. Positioning assembly for positioning a sheet metal element on a flange connection, comprising a flange (1) having a medium passage opening (6),
a mating flange (2) having a medium passage opening (7), wherein the mating flange (2) is connected to the flange (1) by means of a plurality of fastening screws (13, 22, 28, 33), and the medium passage openings (6, 7) of the flange (1) and of the mating flange (2) communicate with one another, and
a sheet metal element (3) having a contact portion (18), which is disposed in a contact plane between the flange (1) and the mating flange (2) about the medium passage openings (6, 7), and having first tabs (17) which are disposed on a first through bore (15) of the sheet metal element (3) and protrude into a first receptacle bore (14) in the mating flange (2) while extending transversely to the contact plane,
wherein
the sheet metal element (3) has at least three first tabs (17) which are received with radial play in the first receptacle bore (14), and
the sheet metal element (3) by means of the first tabs (17) sits on a first one of the fastening screws (13) that leads through the first receptacle bore (14) and through the first through bore (15) and is screwed into a threaded bore (16) in the flange (1), and is positioned relative to the flange (1), **characterized in that** the sheet metal element (3) has a second through bore (24) on which are disposed two diametrically opposite second tabs (26) that protrude with radial play into a second receptacle bore (23) in the mating flange (2) while extending transversely to the contact plane, and the sheet metal element (3) by means of the two second tabs (26) sits on a second one of the fastening screws (22) that leads through the second receptacle bore (23) and through the second through bore (24) and is screwed into a threaded bore (25) in the flange (1), and is positioned relative to the flange (1), and
the second tabs (26) are disposed on opposite sides of a first connection plane (D1) which contains a first longitudinal axis (L1) of the first fastening screw (13) and a second longitudinal axis (L2) of the second fastening screw (22).

2. Positioning assembly according to Claim 1,
**characterized in that**
the radial play of the first tabs (17) relative to the first receptacle bore (14) is greater than a radial play of the first tabs (17) relative to the first fastening screw (13).

3. Positioning assembly according to Claim 1,
**characterized in that**
transversely to the first connection plane (D1), the radial play of the second tabs (26) relative to the second receptacle bore (23) is greater than a radial play of the second tabs (26) relative to the second fastening screw (22).

4. Positioning assembly according to one of Claims 1 to 3,
**characterized in that**
the mating flange (2) has a first positioning bore (29) by way of which the mating flange (2) sits on one of the fastening screws (28) that leads though the first positioning bore (29) and through a through bore (30) of the sheet metal element (3) and is screwed into a threaded bore (31) in the flange (1), and is positioned relative to the flange (1).

5. Positioning assembly according to Claim 4,
**characterized in that**
the mating flange (2) by way of the first positioning bore (29) sits on a third one of the fastening screws (28) that leads through a third through bore (30) of the sheet metal element (3) and is screwed into a threaded bore (31) in the flange (1), or
**in that** the mating flange (2) by way of the first positioning bore (29) sits on the first fastening screw (13).

6. Positioning assembly according to Claim 4 or 5,
**characterized in that**
the radial play of the first tabs (17) in the first receptacle bore (14) is greater than a radial play of the fastening screw (28) in the first positioning bore (29).

7. Positioning assembly according to one of Claims 4 to 6,
**characterized in that**
the mating flange (2) has a second positioning bore (34) by way of which the mating flange (2) sits on one of the fastening screws (33) that leads through the second positioning bore (34) and through a through bore (35) of the sheet metal element (3) and is screwed into a threaded bore (36) in the flange (1), and is positioned relative to the flange (1), and
**in that** the second positioning bore (34) is formed as a slot having a longest diameter and a shortest diameter in the contact plane, wherein the longest diameter is aligned with the first positioning bore (29).

8. Positioning assembly according to Claim 7, **characterized in that**
the mating flange (2) by way of the second positioning bore (34) sits on a fourth one of the fastening screw (33) that leads though a fourth through bore (35) of the sheet metal element (3) and is screwed into a threaded bore (36) in the flange (1), or
**in that** the mating flange (2) by way of the second positioning bore (34) sits on the second fastening screw (22).

9. Positioning assembly according to one of Claims 2 and 3 to 8,
**characterized in that**
a radial play of the fastening screw (33) in the second positioning bore (34) transverse to a second connection plane (D2), which contains a longitudinal axis (L3) of the fastening screw (28) in the first positioning bore (29) and a longitudinal axis (L4) of the fastening screw (33) in the second positioning bore (34), is less than a radial play of the second tabs (26) within the second receptacle bore (23) transverse to the first connection plane (D1).

10. Positioning assembly according to one of Claims 1 to 9,
**characterized in that**
the tabs (17, 26), transversely to the contact plane, are designed to be longer than the pitch of the respective fastening screw (13, 22).

## Revendications

1. Agencement de positionnement pour positionner un élément en tôle sur une liaison à brides comprenant une bride (1) avec une ouverture de passage de fluide (6),
une contre-bride (2) avec une ouverture de passage de fluide (7), la contre-bride (2) étant reliée à la bride (1) au moyen de plusieurs vis de fixation (13, 22, 28, 33) et les ouvertures de passage de fluide (6, 7) de la bride (1) et de la contre-bride (2) communiquant entre elles, et
un élément en tôle (3) avec une section d'appui (18) qui est agencée dans un plan d'appui entre la bride (1) et la contre-bride (2) autour des ouvertures de passage de fluide (6, 7), et avec des premières pattes (17) qui sont agencées sur un premier alésage de passage (15) de l'élément en tôle (3) et qui en s'étendant transversalement au plan d'appui pénètrent dans un premier alésage de réception (14) dans la contre-bride (2),
dans lequel
l'élément en tôle (3) présente au moins trois premières pattes (17) qui sont reçues avec un jeu radial dans le premier alésage de réception (14), et
l'élément en tôle (3) repose, au moyen des premières pattes (17), sur une première des vis de fixation (13) qui est passée à travers le premier alésage de réception (14) et à travers le premier alésage de passage (15) et qui est vissée dans un alésage fileté (16) dans la bride (1), et est positionné par rapport à la bride (1), **caractérisé en ce que**
l'élément en tôle (3) présente un deuxième alésage de passage (24) sur lequel sont agencées deux deuxièmes pattes (26) agencées diamétralement opposées qui, en s'étendant transversalement au plan d'appui, pénètrent avec un jeu radial dans un deuxième alésage de réception (23) dans la contre-bride (2), et
l'élément en tôle (3) repose, au moyen des deux deuxièmes pattes (26), sur une deuxième des vis de fixation (22) qui est passée à travers le deuxième alésage de réception (23) et à travers le deuxième alésage de passage (24) et qui est vissée dans un alésage fileté (25) dans la bride (1), et est positionné par rapport à la bride (1), et les deuxièmes pattes (26) sont agencées sur des côtés opposés d'un premier plan de liaison (D1) comprenant un premier axe longitudinal (L1) de la première vis de fixation (13) et un deuxième axe longitudinal (L2) de la deuxième vis de fixation (22).

2. Agencement de positionnement selon la revendication 1,
**caractérisé**
**en ce que** le jeu radial des premières pattes (17) par rapport au premier alésage de réception (14) est supérieur à un jeu radial des premières pattes (17) par rapport à la première vis de fixation (13).

3. Agencement de positionnement selon la revendication 1,
**caractérisé**
**en ce que**, transversalement au premier plan de liaison (D1), le jeu radial des deuxièmes pattes (26) par rapport au deuxième alésage de réception (23) est supérieur à un jeu radial des deuxièmes pattes (26) par rapport à la deuxième vis de fixation (22).

4. Agencement de positionnement selon l'une quelconque des revendications 1 à 3,
**caractérisé**
**en ce que** la contre-bride (2) présente un premier alésage de positionnement (29) par lequel la contre-bride (2) repose sur l'une des vis de fixation (28) qui est passée à travers le premier alésage de positionnement (29) et à travers un alésage de passage (30) de l'élément en tôle (3) et est vissée dans un alésage fileté (31) dans la bride (1) et est positionnée par rapport à la bride (1).

5. Agencement de positionnement selon la revendication 4,
**caractérisé**
**en ce que** la contre-bride (2) repose par le premier alésage de positionnement (29) sur une troisième des vis de fixation (28), qui est passée à travers un troisième alésage de passage (30) de l'élément en tôle (3) et est vissée dans un alésage fileté (31) dans la bride (1), ou **en ce que** la contre-bride (2) repose par le premier alésage de positionnement (29) sur la première vis de fixation (13).

6. Agencement de positionnement selon la revendication 4 ou la revendication 5,
**caractérisé**
**en ce que** le jeu radial des premières pattes (17) dans le premier alésage de réception (14) est supérieur à un jeu radial de la vis de fixation (28) dans le premier alésage de positionnement (29).

7. Agencement de positionnement selon l'une quelconque des revendications 4 à 6,
**caractérisé**
**en ce que** la contre-bride (2) présente un deuxième alésage de positionnement (34) par lequel la contre-bride (2) repose sur l'une des vis de fixation (33) qui est passée à travers le deuxième alésage de positionnement (34) et à travers un alésage de passage (35) de l'élément en tôle (3) et est vissée dans un alésage fileté (36) dans la bride (1) et est positionnée par rapport à la bride (1), et
**en ce que** le deuxième alésage de positionnement (34) est réalisé sous forme de trou oblong avec un diamètre le plus long et un diamètre le plus court dans le plan d'appui, le diamètre le plus long étant orienté vers le premier alésage de positionnement (29).

8. Agencement de positionnement selon la revendication 7,
**caractérisé**
**en ce que** la contre-bride (2) repose par le deuxième alésage de positionnement (34) sur une quatrième des vis de fixation (33), qui est passée à travers un quatrième alésage de passage (35) de l'élément en tôle (3) et est vissée dans un alésage fileté (36) dans la bride (1), ou **en ce que** la contre-bride (2) repose par le deuxième alésage de positionnement (34) sur la deuxième vis de fixation (22).

9. Agencement de positionnement selon l'une quelconque des revendications 2 et 3 à 8,
**caractérisé**
**en ce qu'**un jeu radial de la vis de fixation (33) dans le deuxième alésage de positionnement (34), transversalement à un deuxième plan de liaison (D2) qui comprend un axe longitudinal (L3) de la vis de fixation (28) dans le premier alésage de positionnement (29) et un axe longitudinal (L4) de la vis de fixation (33) dans le deuxième alésage de positionnement (34), est inférieur à un jeu radial des deuxièmes pattes (26) à l'intérieur du deuxième alésage de réception (23) transversalement au premier plan de liaison (D1).

10. Agencement de positionnement selon l'une quelconque des revendications 1 à 9,
**caractérisé**
**en ce que** les pattes (17, 26) sont réalisées transversalement au plan d'appui plus longues que le pas de la vis de fixation respective (13, 22).
